# EUROPÄISCHE PATENTSCHRIFT

(11) **EP 1 564 462 B1**
(45) Veröffentlichungstag und Bekanntmachung des Hinweises auf die Patenterteilung: **06.08.2008**
(21) Anmeldenummer: 05002876.0
(22) Anmeldetag: 11.02.2005
(51) Int. Cl.: F16K 17/30

(54) **Rohrbruchventil**
Pipe-fracture valve
Vanne d'arrêt automatique

(30) Priorität: 11.02.2004 DE 102004006663
(43) Veröffentlichungstag der Anmeldung: 17.08.2005
(73) Patentinhaber: WEBER, Gisela, A-2474 Gattendorf (AT)
(72) Erfinder: WEBER, Gisela, A-2474 Gattendorf (AT)
(74) Vertreter: König, Norbert

(56) Entgegenhaltungen:
- EP-A- 1 314 921
- EP-A- 1 348 900
- WO-A-02/16813
- FR-A- 2 636 379
- US-A- 5 293 898

## Beschreibung

Die Erfindung betrifft ein Rohrbruchventil zum Verschluss einer Druckleitung im Schadensfall gemäß dem Oberbegriff von Anspruch 1.

Derartige Rohrbruchventile werden als Sicherung in Hydraulikleitungen eingebaut und sperren die Hydraulikleitung bei einem schlagartigen Druckabfall des Druckmittels. Hierdurch kann in hydraulisch betätigen Hebebühnen und Hebearmen bei einem Bruch einer der Hydraulikleitungen ein Zurückfließen des Fluids in die defekte Leitung und ein plötzliches Absinken der angehobenen Last verhindert und eine angehobene Last in ihrer Position gehalten werden.

Ein Rohrbruchventil der eingangs genannten Art ist aus der EP 1 314 921 A2 bekannt. In dem Rohrbruchventil ist ein federvorgespannter Ventilteller vorgesehen, der bei einem hinreichend großen Druckabfall gegen die Federwirkung auf einen Ventilsitz gedrückt wird und hierdurch einen Durchlassspalt des Druckmittels verschließt.

Bei dem Rohrbruchventil der EP 1 314 921 A2 erfolgt die Anbindung des Ventiltellers an dem Ventilgehäuse über einen als Blechformteil ausgebildeten Einsatzkörper, der von einem Sprengring gehalten wird. Der Einsatzkörper weist ein mittiges Durchgangsloch für eine Schraube sowie weitere Durchgangslöcher für das Fluid auf. Der Ventilteller ist auf den Gewindebolzen der Schraube gesetzt und wird von einer vorgespannten, zwischen dem Einsatzkörper und dem Ventilteller angeordneten Ventilfeder in die Offenstellung gedrückt, in der zwischen einem Außenkonusbereich des Ventiltellers und einem entsprechendem Dichtsitz an der Unterseite des Ventilgehäuses ein Durchlassspalt verbleibt. Der Ventilteller wird durch zwei auf den Gewindebolzen gesetzte Muttern gesichert und von einer zwischen den Muttern und dem Ventilteller als Gegenfeder zur Ventilfeder vorgesehenen Spannfeder gehalten.

Versuche zeigen jedoch, dass ein derartiges Rohrbruchventil keine hinreichende Sicherheit gewähren kann. So tritt bereits in dem Bereich des mittigen Durchgangslochs des Einsatzkörpers und dem Gewindebolzen ein erheblicher Abrieb bis hin zur völligen Zerstörung auf. Weiterhin treten auch Undichtigkeiten und ein Abrieb an dem mittigen Durchgangsloch des Ventiltellers auf. Undichtigkeiten in einem Rohrbruchventil können jedoch schnell zu schwerwiegenden Folgeschäden führen, da in einem Hydrauliksystem bereits bei kleinen Undichtigkeiten, bei denen nur einige Tropfen des Hydraulikfluids austreten, deutliche Druckabfälle auftreten können.

Zudem ist die Einstellung des Duchlassspaltes durch den Benutzer aufwendig, da hierzu der Schraubenkopf und die Muttern durch Einführen von Werkzeugen von beiden axialen Enden verstellt werden müssen.

Die WO 02/16813 A1 zeigt ein Rohrbruchventil, bei dem der Ventilteller von der Ventilfeder gegen die Sicherungsmutter ohne eine zusätzliche Gegenfeder gedrückt wird. Die Durchlassscheibe kann hierbei sternförmig oder zahnradförmig ausgebildet sein.

Der Erfindung liegt die Aufgabe zugrunde, ein Rohrbruchventil zu schaffen, das eine hohe Sicherheit gegenüber Beschädigungen und gegenüber einem Hydraulikverlust gewährleistet und das in einfacher Weise einstellbar ist.

Diese Aufgabe wird durch ein Rohrbruchventil nach Anspruch 1 gelöst. Die Unteransprüche beschreiben bevorzugte Weiterbildungen.

Der Erfindung liegt die Erkenntnis zugrunde, dass bei dem in der EP 1 314 921 A2 gezeigten Rohrbruchventil die gemessenen Schäden bereits durch ein plastisches Durchbiegen des als Blechformteil ausgebildeten Einsatzkörpers bzw. Durchlassscheibe auftreten. Ein derartiges Blechformteil wird mit einer Dicke von etwa 0,8 mm realisiert. Hierbei treten Biegebeanspruchungen dieses Teils bereits durch das Anziehen der Schraube und der Muttern an, sowie weiterhin durch die Biegebeanspruchungen aufgrund des Fluidstroms, wobei diese Beanspruchungen bei einem derartigen Blechformteil bei dauerhafter Belastung zu plastischen Verformungen führen. Weiterhin konnte erfindungsgemäß festgestellt werden, dass die axiale Überlappung des Gewindebereichs des Gewindebolzens und des Einsatzkörpers bei der sich mit Axialspiel bewegenden Schraube zu einem starken Abrieb an dem Einsatzkörper führt, wodurch ein ovales Loch entsteht und eine völlige Zerstörung des Durchlassteils auftreten kann.

Erfindungsgemäß wird bereits durch die hohe Stabilität des Durchlassmittels gegenüber den auftretenden Biegmomenten eine deutliche Verbesserung gegenüber dem Stand der Technik erreicht. Das Durchlassmittel kann erfindungsgemäß vorteilhafterweise einteilig mit dem Einschraubgehäuse, d.h. als Durchlassbereich des Einschraubgehäuses ausgebildet sein, wodurch eine erhöhte Stabilität auftritt. Hierbei kann das erfindungsgemäße Einschraubgehäuse mit dem Durchlassbereich dennoch weiterhin als Drehteil ausgebildet sein, in dem z.B. entsprechende Bohrungen für den Durchtritt des Hydraulikfluids ausgebildet sind. Alternativ hierzu ist auch der Einsatz eines zusätzlichen Durchlasskörpers bzw. einer Durchlassscheibe mit entsprechender Dicke möglich, die sowohl eingesetzt als auch eingeschraubt werden kann.

Vorteilhafterweise ist die axiale Dicke des als Führung wirkenden Durchgangslochs größer oder gleich seiner radialen Breite, so dass es gut geführt ist ohne wesentliche Verkippungen. Die Dicke kann z.B. größer/gleich 1,6 mm sein.

Erfindungsgemäß ist weiterhin der Ventilteller nicht mit Axialspiel, sondern starr auf dem Bolzen befestigt. Dies kann zum einen durch eine einteilige Ausbildung oder feste Verbindung des Ventiltellers mit dem Bolzen erfolgen, wobei in diesem Fall die Mutter am anderen Ende des Bolzens vorgesehen ist und zur Einstellung des Axialspiels gedreht wird. Alternativ hierzu kann der Ventilteller auch als Mutter auf das Gewinde des Bolzens gedreht sein und somit durch den Gewindeeingriff spielfrei aufgenommen sein. Hierbei ist vorteilhafterweise ein zusätzliche Sicherung bzw. Klemmsicherung vorgesehen, z.B. durch Ausbildung als Sicherungsmutter mit einem Kunststoffbereich oder eine Klemmwirkung durch einen zylindrischen geschlitzten Ansatz. Indem erfindungsgemäß kein Axialspiel zwischen dem Ventilteller und einem Gewinde auftritt, kann auch nicht der bei den eingangs genannten Druckschriften erfolgende Abrieb zwischen Ventilteller und Gewinde und weiterhin auch kein Hydraulikverlust durch entlang des Gewindes strömendes Fluid auftreten.

Eine Einstellbarkeit von einer Seite wird durch eine Verdrehsicherung erreicht. Dies kann bei beiden erfindungsgemäßen Ausbildungen, d.h. sowohl der starren Ausbildung des Ventiltellers mit dem Bolzen als auch der Ausbildung des Ventiltellers als Mutter erfolgen. Hierzu kann zum einen ein Passstift in den Ventilteller außermittig eingepresst und in dem Einschraubgehäuse fixiert werden, z.B. in einer Bohrung des Durchlassmittels. Weiterhin kann z.B. auch einen Formschluss, z.B. eine Abflachung, zwischen dem Bolzen und dem Durchlassmittel erfolgen.

Erfindungsgemäß ist weiterhin erkannt worden, dass bei der EP 1 314 921 A2 und der WO 02/16813 A1 der Abrieb in dem mittigen Durchgangsloch der Durchlassscheibe durch das Gewinde des Bolzens verursacht wird, der bei der Beströmung des Ventiltellers in dem Loch arbeitet und dieses bis zur völligen Zerstörung verschleißen kann. Erfindungsgemäß weist vorteilhafterweise der Bolzen über die gesamte Länge des mittleren Durchgangslochs des Durchlassmittels einen gewindefreien Schaftbereich auf, so dass hier kein Abrieb durch das Gewinde auftreten kann.

Das erfindungsgemäße Einschraubgehäuse kann insbesondere eine Einschraubverschraubung sein, die mit ihrem Außengewinde in ein Bauteil eingedreht wird und zur Aufnahme eines Rohres dient. Weiterhin kann das Einschraubgehäuse auch eine Ventileinschraubgehäuse sein, das mit seinem Außengewinde vollständig in ein Innengewinde des Bauteils eingedreht wird, z.B. mit einer Fixierung über Klebstoff auf seinem Außengewinde, wobei von außen an der Bohrung ein zusätzliches Fitting für die Aufnahme eines Anschlussrohrs angesetzt wird.

Die Erfindung wird im Folgenden anhand der beiliegenden Zeichnungen an einigen Ausführungen erläutert. Es zeigen:
- Fig. 1a, b: einen Axialschnitt und eine Draufsicht auf ein Rohrbruchventil gemäß einer ersten Ausführungsform mit Einstellmutter und Passstift;
- Fig. 2 a, b: ein Rohrbruchventil gemäß einer weiteren Ausführungsform mit Einstellschraube, Passstift und Ventilteller als Mutter im Axialschnitt und in der Draufsicht;
- Fig. 3 a, b: ein Rohrbruchventil gemäß einer weiteren, gegenüber Fig. 2 abgewandelten Ausführungsform mit höher positionierter Einstelleinrichtung;
- Fig. 4 a, b: ein Rohrbruchventil gemäß einer weiteren, gegenüber Fig. 2 abgewandelten Ausführungsform mit einem zusätzlichen Sprengring als Verliersicherung des Ventiltellers;
- Fig. 5 a, b: ein Rohrbruchventil gemäß einer weiteren, gegenüber Fig. 4 abgewandelten Ausführungsform mit höher positionierter Einstelleinrichtung;
- Fig. 6 a, b: ein Rohrbruchventil gemäß einer weiteren, gegenüber Fig. 2 abgewandelten Ausführungsform mit einer zusätzlichen Hutmutter als Verliersicherung des Ventiltellers;
- Fig. 7 a, b: ein Rohrbruchventil gemäß einer weiteren, gegenüber Fig. 6 abgewandelten Ausführungsform mit höher positionierter Einstelleinrichtung;
- Fig. 8 a, b: ein Rohrbruchventil gemäß einer weiteren Ausführungsform mit Einstellschraube und geschlitztem Ansatz am Ventilteller im Axialschnitt und in der Draufsicht;
- Fig. 9 a, b: ein Rohrbruchventil gemäß einer weiteren, gegenüber Fig. 8 abgewandelten Ausführungsform mit einem zusätzlichen Sprengring als Verliersicherung des Ventiltellers;
- Fig. 10 a, b: ein Rohrbruchventil gemäß einer weiteren, gegenüber Fig. 8 abgewandelten Ausführungsform mit einer zusätzlichen Hutmutter als Verliersicherung des Ventiltellers;

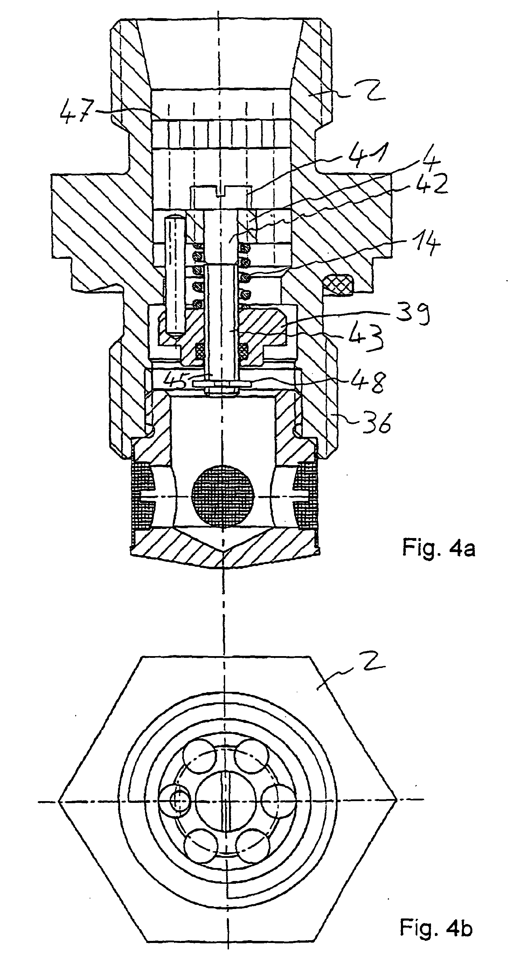

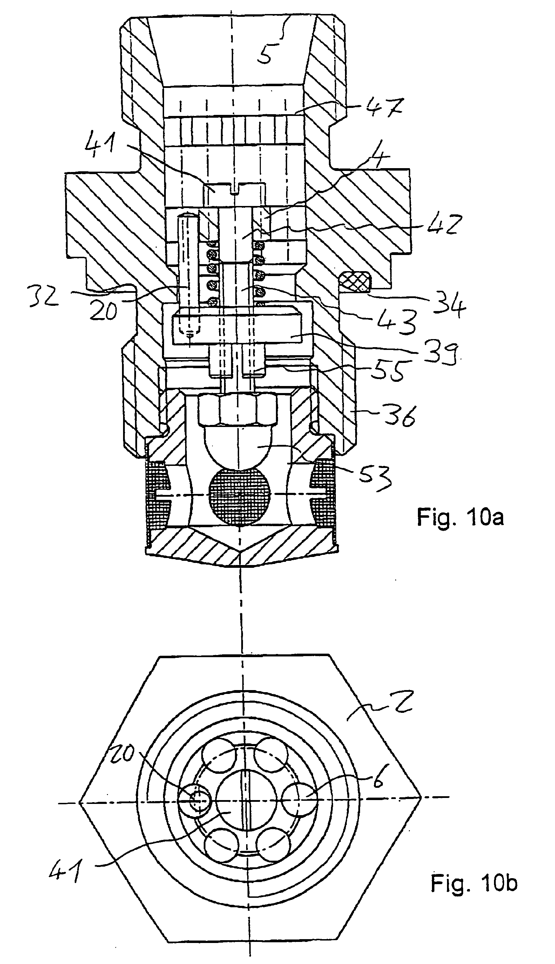

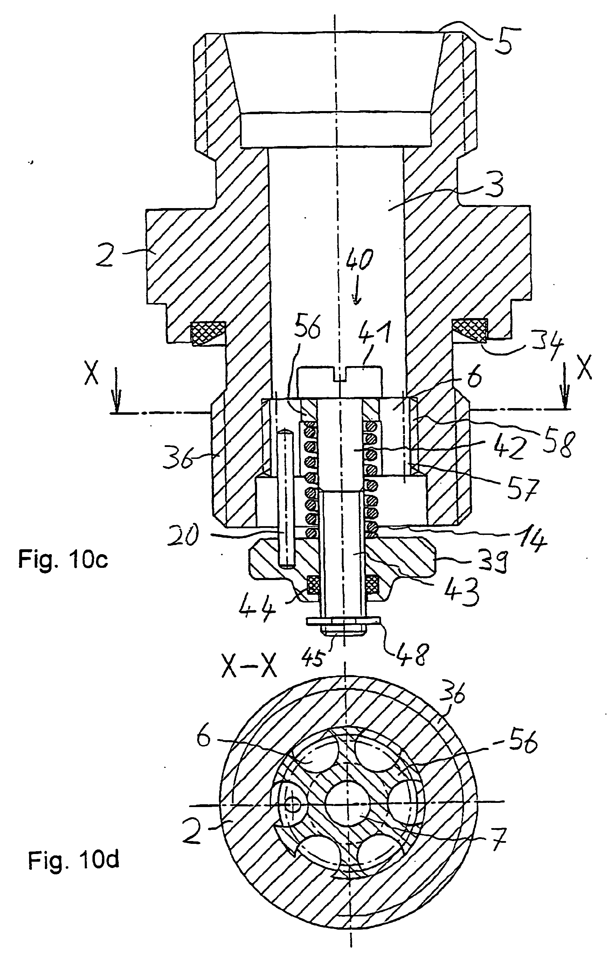

- Fig. 10 c, d: ein Rohrbruchventil gemäß einer weiteren, gegenüber Fig. 4 abgewandelten Ausführungsform mit eingedrehtem Einsatzkörper;

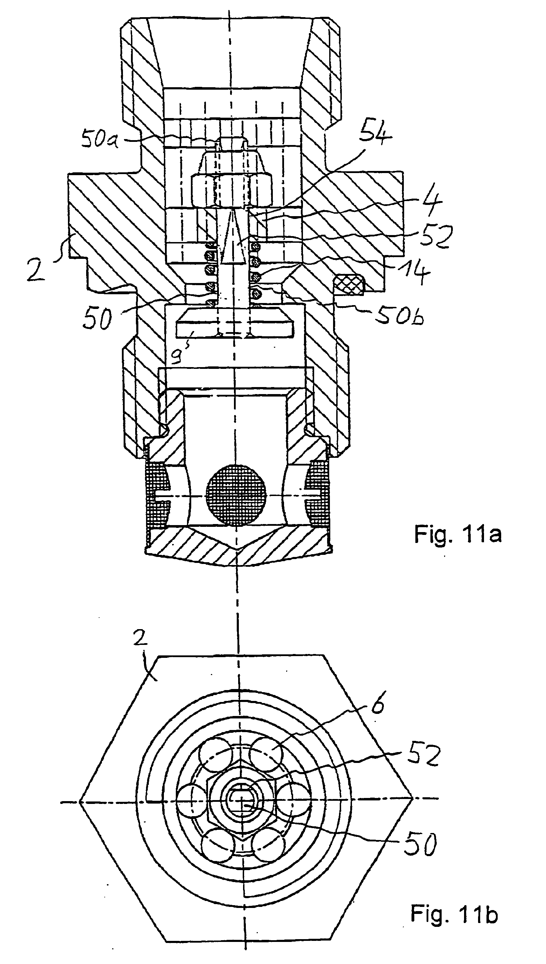

- Fig. 11 a, b: ein Rohrbruchventil für ein Hydrauliksystem gemäß einer weiteren Ausführungsform mit Einstellmutter und abgeflachtem Bolzen am Ventilteller;

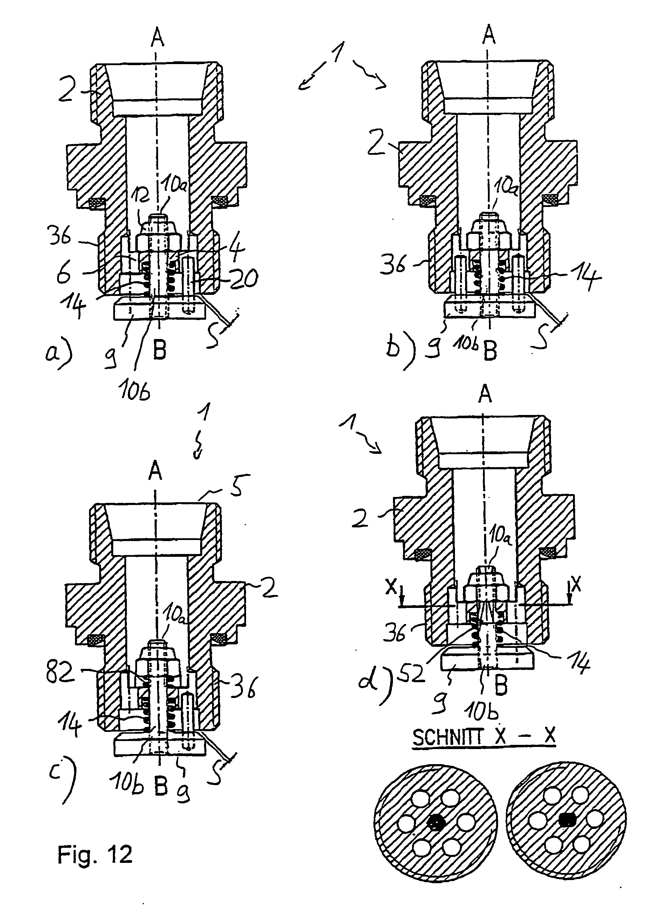

- Fig. 12 a, b: Rohrbruchventile gemäß weiterer Ausführungsformen mit von unten eingesetztem und von oben einstellbarem Einsatz mit a) einem Passstift als Verdrehsicherung, b) zwei Passstiften als Verdrehsicherung;
- Fig. 12 c: ein Rohrbruchventil gemäß einer weiteren Ausführungsform mit zwei Federn;
- Fig. 12 d: ein Rohrbruchventil gemäß einer weiteren, gegenüber Fig. 12a abgewandelten Ausführungsform mit abgeflachtem Bolzen statt Passstift als Verdrehsicherung im Axialschnitt und Radialschnitte X-X gemäß zweier Ausführungsformen;

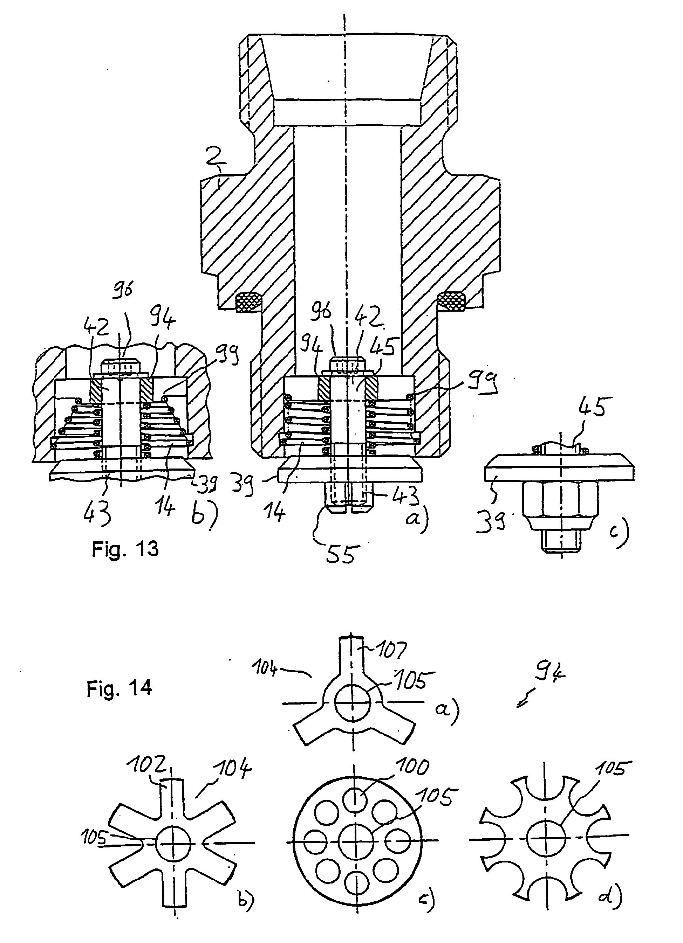

- Fig. 13 a: ein Rohrbruchventil gemäß einer weiteren Ausführungsform im Axialschnitt mit Durchlassscheibe und Ventilteller mit geschlitzten Ansatz;
- Fig. 13 b: eine gegenüber Fig. 13 a geänderte Ausführungsform als Ausschnitt des relevanten Bereichs;
- Fig. 13 c: eine gegenüber Fig. 13 a abgewandelte Ausführungsform als Ausschnitt des abgewandelten Bereichs;
- Fig. 14 a, b, c, d: verschiedene Ausführungsformen von Durchlassscheiben in den Fig. 13a bis c;

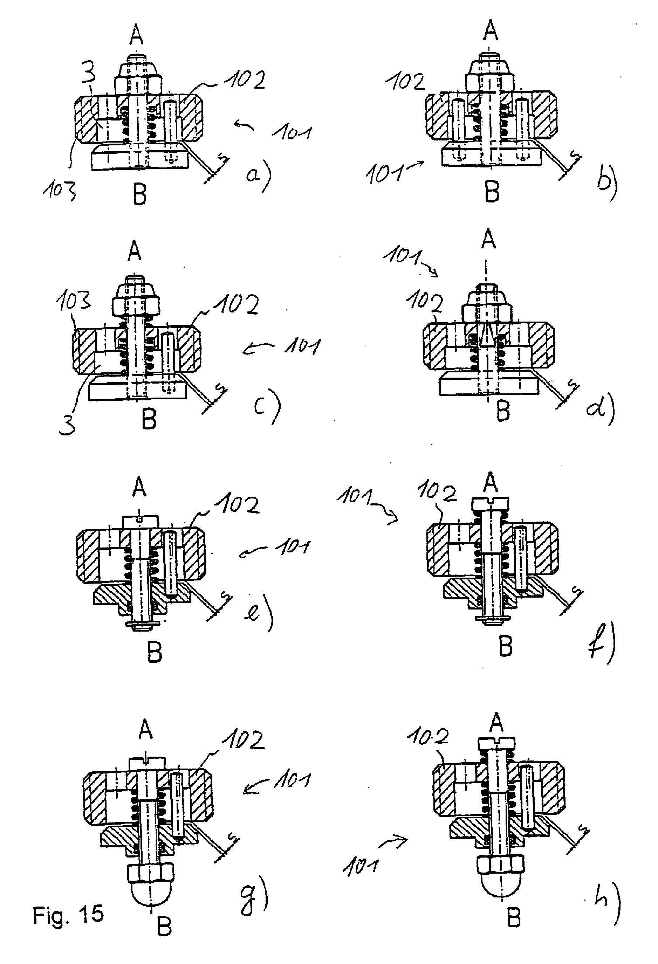

- Fig. 15 a bis h: verschiedene Ausführungsformen von Rohrbruchventilen zum Einsatz in eine Bohrung;

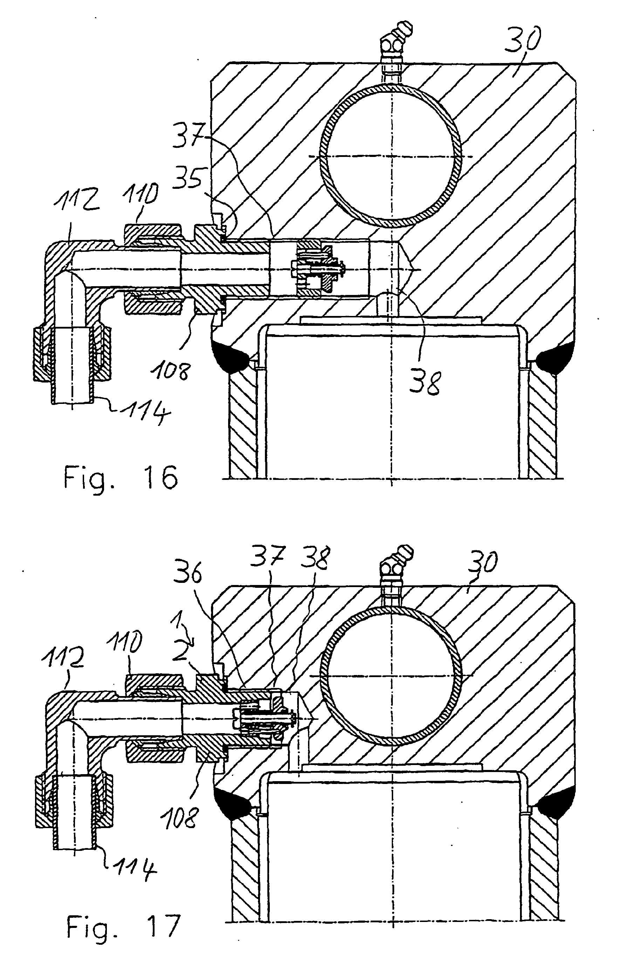

- Fig. 16: eine Einbausituation der Rohrbruchventile aus Fig. 15a bis h;

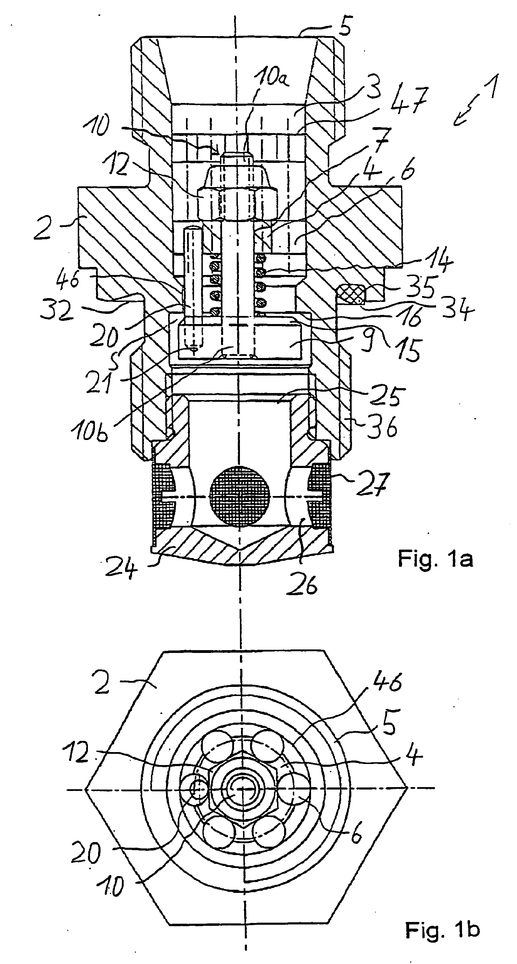

- Fig. 17: eine Einbausituation der Rohrbruchventile aus den Fig. 1 bis 14.

Das in Fig. 1 gezeigte Rohrbruchventil 1 dient zum Verschluss einer Hydraulikleitung bei einem plötzlichem Druckabfall, wie er in der Regel bei einem Rohrbruch auftritt. Das Rohrbruchventil 1 weist eine Einschraubverschraubung 2 mit einem sich in Axialrichtung durchgängig erstreckenden, im wesentlichen zylindrischen Gehäuseinnenraum 3 auf. Bei dieser Ausführungsform ist unterhalb eines oberen Anschlusses bzw. Eingangsanschlusses 5 ein Durchlassbereich 4 mit beliebig vielen, z.B. sechs in Umfangsrichtung verteilt angeordneten Bohrungen 6 und einem mittleren Durchgangsloch 7 einteilig mit der Einschraubverschraubung 2 ausgebildet. Ein Ventilteller 9 ist mit einem Bolzen 10 einteilig ausgebildet oder starr verbunden.

Der Bolzen 10 ragt durch das mittlere Durchgangsloch 7 des Durchlassbereiches 4 und ist an seinem anderen, d.h. oberen Ende mit einer Einstellmutter 12 gesichert. Eine Ventilfeder 14 ist als Schraubenfeder um den Bolzen 10 gelegt, stützt sich an der Unterseite des Durchlassbereichs 4 ab und drückt den Ventilteller 9 mit einer Vorspannkraft nach unten, so dass die Einstellmutter 12 auf der Oberseite des Durchlassbereiches 4 zur Anlage kommt. Zwischen einem Außenkonus 15 des Ventiltellers 9 und einem Dichtsitz 16 der Einschraubverschraubung 2 wird somit ein Durchlassspalt S gebildet, solange die Ventilfeder 14 den Ventilteller 9 in der in Fig. 1 a gezeigten Offenstellung hält. Falls eine Druckdifferenz zwischen dem unteren Anschluss bzw. dem Bereich unterhalb des Ventiltellers und dem als Schlauchanschluss dienenden oberen Anschluss 5 des Rohrbruchventils 1 einen Grenzwert überschreitet, wird die Ventilfeder 14 zusammengedrückt, so dass der Außenkonus 15 auf dem Dichtsitz 16 zur Anlage kommt und den Durchlassspalt S verschließt. Das Axialspiel bzw. der Durchlassspalt S wird durch Verdrehen der Einstellmutter 12 auf dem Bolzen 10 eingestellt, wozu als Werkzeug ein Rohrsteckschlüssel durch den oberen Anschluss 5 in den Innenraum 3 auf die Mutter 12 gesetzt werden kann.

Der Bolzen 10 kann in dieser Ausführungsform sowie entsprechend den Ausführungsformen der Figuren 11, 12, 15a bis d durchgängig als Gewindebolzen oder aber mit einem durch das Durchlassmittel geführten gewindefreien Schaftbereich 10b und einem Gewindebereich 10a zur Aufnahme der Mutter ausgebildet sein.

Erfindungsgemäß wird eine Einstellung des Durchlassspaltes S von dem oberen Anschluss 5 her ohne Gegenhalten des Ventiltellers 9 ermöglicht, indem als Verdrehsicherung ein Passstift 20 in ein an der Oberseite des Ventiltellers 9 ausgebildetes Sackloch 21 eingepresst ist und - wie der Draufsicht der Fig. 1b zu entnehmen ist - in eine der Bohrungen 6 ragt. Bei Drehen der Einstellmutter 12 stützt sich der Passstift 20 an dem Durchlassbereich 4 der Einschraubverschraubung 2 ab und hält somit den Ventilteller 9 gegen.

Am unteren Ende der Einschraubverschraubung 2 ist ein Filterfitting 24 aus z.B. Aluminium dichtend eingeschraubt, dessen oberer Eingangsanschluss 25 den Innenraum 3 der Einschraubverschraubung 2 mit seinen um 90 ° abgewinkelten Ausgangsanschlüssen 26 verbindet, an denen Filter 27 zum Filtern von in der Hydraulikflüssigkeit enthaltenen Teilchen, insbesondere Abriebteilchen der Metallteile oder Dichtungen, von außen aufgesetzt sind. Die Filter 27 werden hierbei in dem eingeschraubten Zustand durch die Einschraubverschraubung 2 gesichert.

Zum Anschluss an einen Anschlussstutzen eines in Fig. 17 gezeigten Bauteils 30, z.B. einem Hydraulikzylinder, kann gemäß Fig. 1 a wahlweise gemäß der linken Seite der Zeichnung eine Schneidkante 32 ausgebildet oder gemäß der rechten Seite ein O-Ring 34 in einer O-Ringnut 35 zur Dichtung vorgesehen sein. Das Rohrbruchventil 1 wird über sein Außengewinde 36 in ein Innengewinde 37 einer Bohrung 38 des Bauteils 30 eingeschraubt.

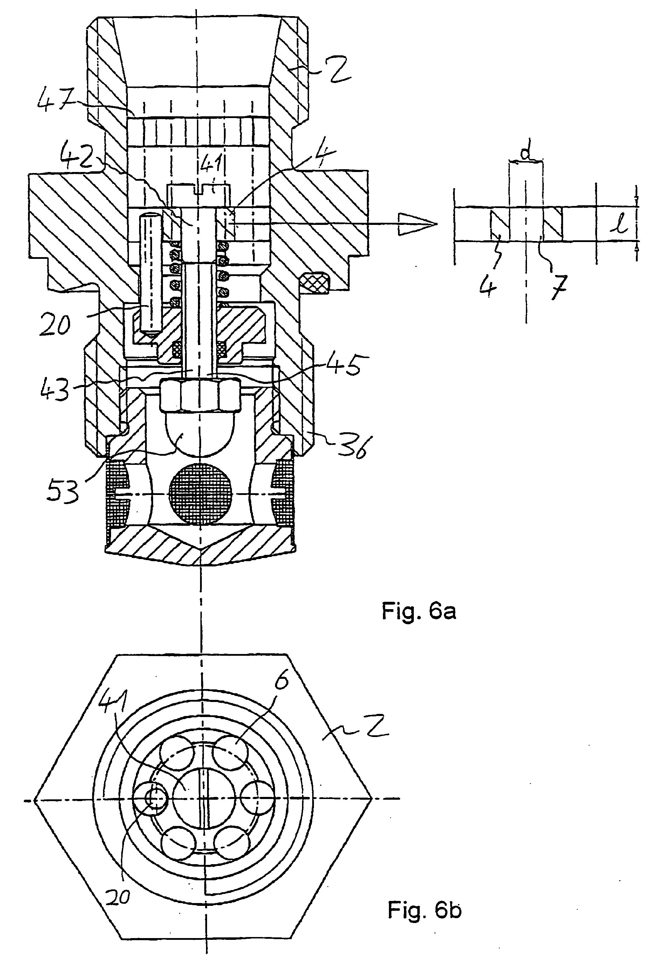

Erfindungsgemäß weist der Durchlassbereich 4 eine hinreichende Steifigkeit aus, so dass er bei den zulässigen Biegebeanspruchungen durch das Anziehen der Einstellmutter 12 sowie der durch das Hydraulikfluid ausgeübten Beanspruchungen biegesteif ist. Der Durchlassbereich kann hierzu z.B. eine Dicke von 1,6 mm aufweisen; weitere Ausführungen hierzu erfolgen weiter unten mit Bezug zu Fig. 6a .

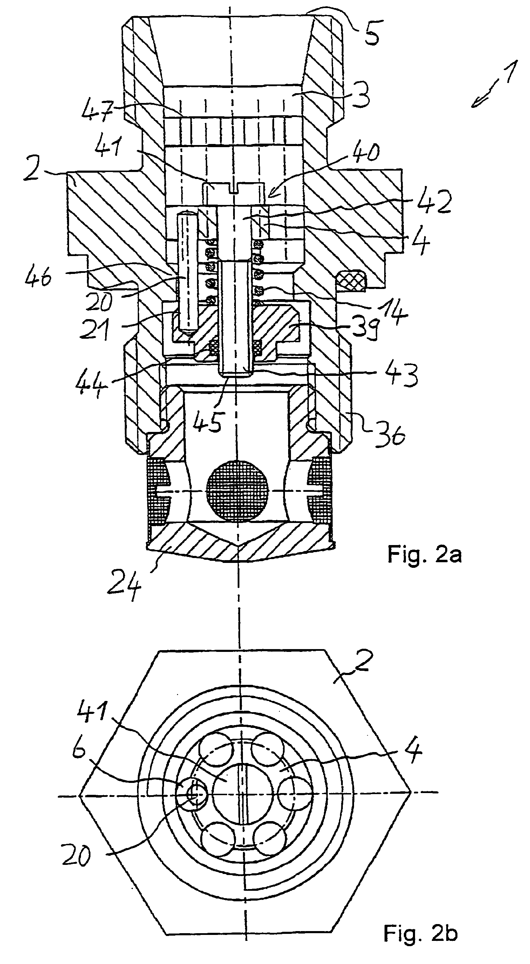

Bei der Ausführungsform der Fig. 2 entspricht der Aufbau, insbesondere die Einschraubverschraubung 2 und der Durchlassbereich 4 im wesentlichen denjenigen von Fig. 1. Anders als in Fig. 1 ist der Ventilteller 39 als Dichtungsmutter ausgebildet. Eine Schraube 40 weist einen sich oben auf dem Durchlassbereich 4 der Einschraubverschraubung 2 abstützenden Schraubenkopf 41 und einen Bolzen 45 mit einem oberen gewindefreien Schaftbereich 42 und einem unteren Gewindebereich 43 auf. Der Schaftbereich 42 ist durch das mittige Durchgangsloch 7 des Durchlassbereichs 4 gesteckt, der untere Gewindebereich 43 ist in den Ventilteller 39 geschraubt und wird durch einen Kunststoffring 44, z.B. aus Nylon, des Ventiltellers 39 gesichert. Durch diese Sicherung kann sich die Schraube 40 nicht lockern und in axialer Richtung nach oben drehen, so dass sich auch der Ventilteller 39 nicht lösen kann. Der Passstift 20 ist in eine Sackbohrung 21 des Ventiltellers 39 gepresst.

Eine Einstellung des Axialspiels bzw. Durchlassspaltes S erfolgt wiederum von oben, indem ein Benutzer einen Schraubendreher durch den oberen Anschluss 5 in den Gehäuseinnenraum 3 einführt, auf den Schraubenkopf 41 setzt und die Schraube 40 in dem Ventilteller 39 dreht, der wiederum durch den mindestens einen Passstift 20 in einer der Bohrungen 6 des Durchlassbereiches 4 verdrehsicher gehalten ist.

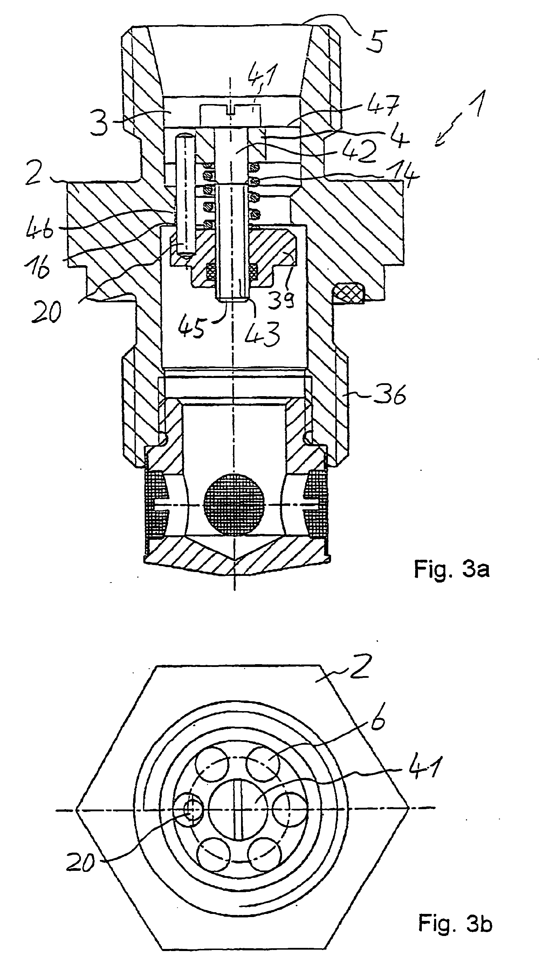

Die Ausführungsform der Fig. 3 entspricht im Wesentlichen derjenigen der Fig. 2, wobei der Durchlassbereich 4 und der Absatz 46 der Einschraubverschraubung mit dem Dichtsitz 16 in dem Gehäuseinnenraum höher angeordnet sind. Erfindungsgemäß kann grundsätzlich eine beliebige bzw. geeignete Positionierung dieser Elemente in der Einschraubverschraubung 2 erfolgen, die den jeweiligen Anforderungen, insbesondere bezüglich der Zugänglichkeit oder Erreichbarkeit des jeweiligen Einstellmittels 12 bzw. 41 entspricht. Bei der Ausführungsform der Fig. 3 wird ein Absatz 47 für ein Anschlussrohr direkt durch die Oberseite des Durchlassbereichs 4 gebildet, wohingegen dieser in Fig. 1 höher als der Durchlassbereich 4 liegt.

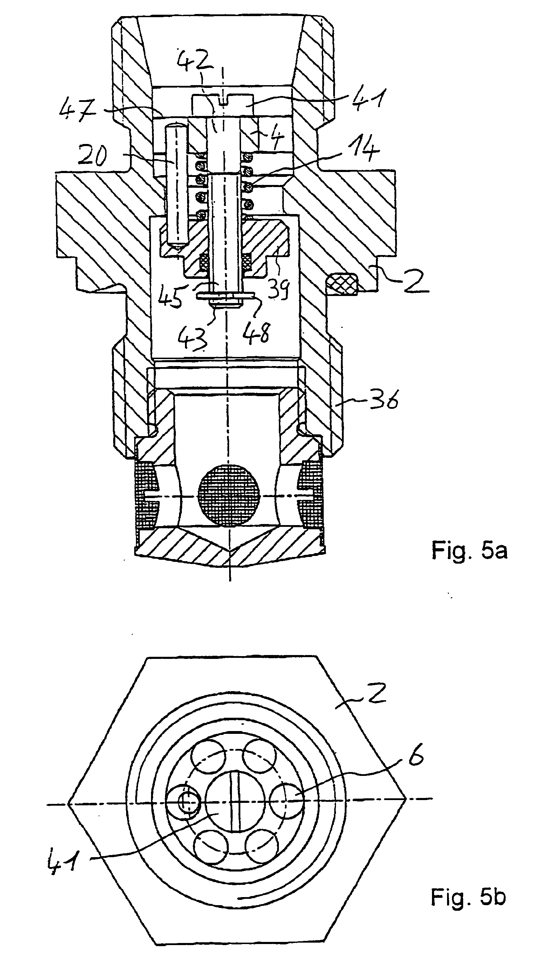

Bei der Ausführungsform der Figuren 4, 5 ist gegenüber den Figuren 2, 3 am unteren Endbereich des Bolzens 45 in einer Sprengringnut ein Sprengring 48 eingesetzt, der eine zusätzliche Verliersicherung für den als Mutter ausgebildeten Ventilteller 39 bildet.

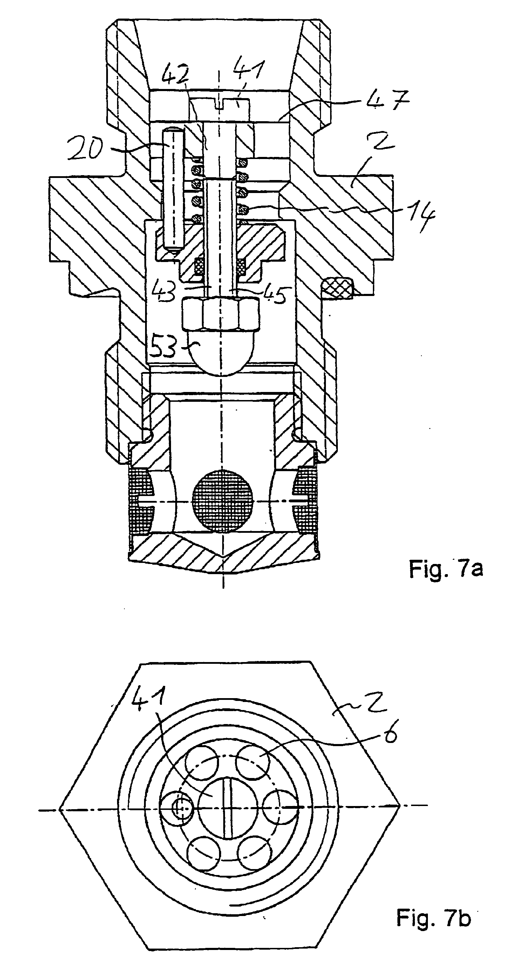

Bei der Ausführungsform der Figuren 6 und 7 ist gegenüber den Ausführungsformen der Figuren 2, 3 eine Hutmutter 53 als Verliersicherung auf das untere Ende des Bolzens 45 gesetzt.

Wie in Fig. 6a eingezeichnet, ist bei den Ausführungsformen 1 bis 12 eine als Führung wirkende axiale Länge I des mittigen Durchgangslochs 7 bzw. des Durchlassbereichs 4 vorzugsweise größer oder gleich einer radialen Breite d des mittigen Durchgangslochs 7 für den Bolzen 10 bzw. 45. Hierdurch wird die hinreichende Steifigkeit des Durchlassbereichs 4 zur Verhinderung einer plastischen Verformung erreicht und insbesondere eine hinreichend genaue Führung des Bolzens, insbesondere des gewindefreien Schaftbereichs 42 in dem Durchlassbereich 7, sicher gestellt, was zu vernachlässigbaren Kippwinkeln des Bolzens in dem Durchgangsloch 7 führt.

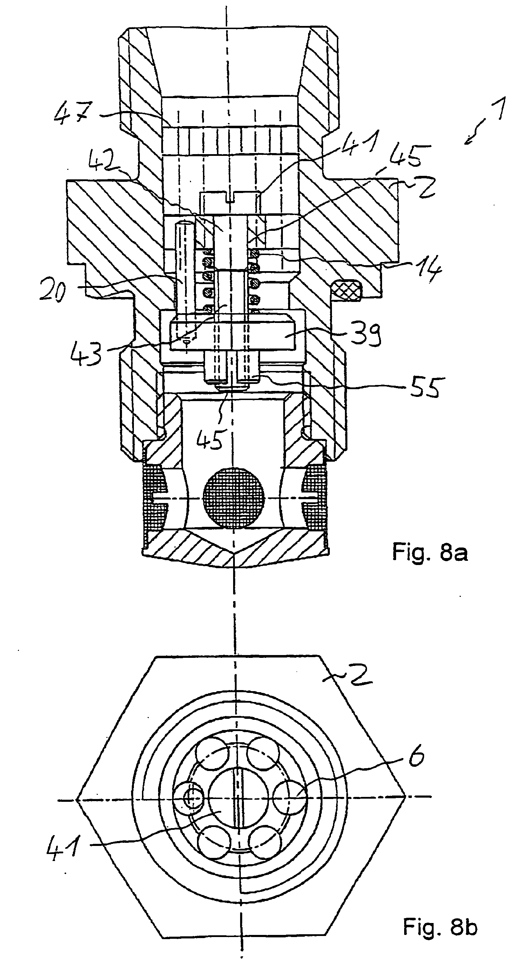

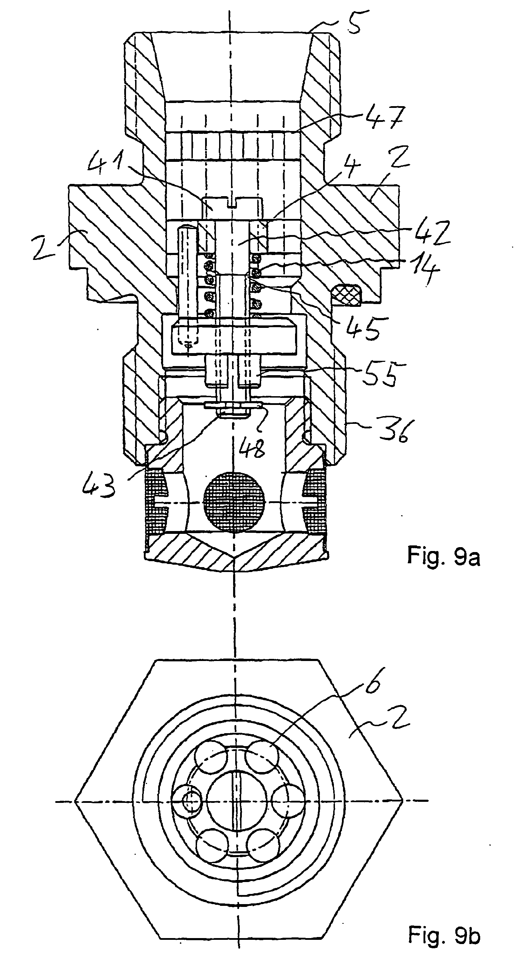

Bei der Ausführungsform der Fig. 8 ist bei ansonsten entsprechendem Aufbau wie denjenigen der Fig. 2, 3 der Ventilteller 39 zur Sicherung der Schraube 40 mit einem zylindrischen, geschlitzten Ansatz 55 versehen, durch den der Gewindebereich 43 des Bolzens 45 gedreht wird und der diesen hierdurch als Sicherung klemmt. In den Figuren 9 und 10 sind wiederum weitere, gegenüber Fig. 8 abgewandelte Ausführungsformen gezeigt, in denen - entsprechend den Ausführungsformen der Figuren 5, 6 - ein Sprengring 48 bzw. eine Hutmutter 53 als Verliersicherung für den Ventilteller auf den Bolzen 45 aufgesetzt ist.

Die Figuren 10c und d zeigen eine Ausführungsform im Axialschnitt und Radialschnitt X-X, bei der eine Schraube 40 gemäß Fig. 2a, b bis 4a, b mit einem Sprengring 48 entsprechend Fig. 4a, b vorgesehen ist. Hierbei ist jedoch anstelle eines Durchlassbereichs ein Durchlassteil 56 mit einem Außengewinde 57 in ein Innengewinde 58 der Einschraubverschraubung 2 eingedreht. Das Außengewinde 57 wird in das Innengewinde 58 verdrehsicher aufgenommen, indem es durch Körnerschlag gesichert oder geklebt wird. Hierbei tritt keine Querschnittsverengung durch einen Sprengring auf.

Bei der Ausführungsform der Fig. 11 ist gegenüber der Ausführungsform der Fig. 1 ein Bolzen 50 mit einer Abflachung 52 vorgesehen. Entsprechend weist das Durchgangsloch 54 des Durchlassbereiches 4 eine entsprechende Abflachung zur formschlüssigen Aufnahme des abgeflachten Bolzens 50 auf. Hierdurch wird eine Verdrehsicherung des Bolzens 50 in dem mit der Einschraubverschraubung 2 einteilig ausgebildeten Durchlassbereich 4 erreicht. Somit kann gegenüber der Ausführungsform der Fig. 1 der Passstift 20 entfallen.

Der abgeflachte Bolzen 50 wird durch das mittige Durchgangsloch 54 des Durchlassbereichs 4 gesteckt, die Einstellmutter 12 von oben aufgesetzt und angezogen, wobei auch hier nachträglich eine jederzeitige Einstellung und Änderung des Durchlassspaltes S von oben mittels eines Rohrsteckschlüssels durch Drehen der Einstellmutter 12 möglich ist.

Die Ausführungsformen der Fig. 12a bis 12d weisen einen ähnlichen Aufbau wie Fig. 1 auf, jedoch ist der Ventilteller 9 jeweils am unteren Ende der Einschraubverschraubung 2 angeordnet. Ein Filterfitting ist entsprechend nicht vorgesehen. Fig. 12 a entspricht ansonsten Fig. 1a, Fig. 12b weist demgegenüber zwei Passstifte 20 auf, die zur Verdrehsicherung in den Ventilteller 9 eingepresst und in gegenüber liegenden Bohrungen 6 eingesetzt sind. Hierdurch wird eine etwas höhere Stabilität der Verdrehsicherung bei Verdrehen der Mutter 12 erreicht. Eine derartige Anbringung von zwei oder mehr Passstiften ist grundsätzlich bei allen Ausführungsformen mit Passstift möglich.

Die Ausführungsform der Fig. 12c ist gegenüber derjenigen der Fig. 12a dahingehend abgeändert, dass zusätzlich zu der Ventilfeder 14 eine obere Zusatzfeder 82 vorgesehen ist, die zwischen der Einstellmutter 12 und dem Durchlassbereich 4 angeordnet ist. Hierdurch kann bei einem Druckanstieg an dem oberen Anschluss 5, der einen vorgegebenen Solldruck übersteigt, durch Zusammendrücken der oberen Zusatzfeder 82 eine Vergrößerung des Durchlassspaltes S ermöglicht werden, ohne die Wirkung der unteren Ventilfeder 14 zu beeinträchtigen.

Bei der Ausführungsform der Fig. 12d ist als Verdrehsicherung anstelle des Passstiftes 20 in dem Bolzen 10 ein Formschluss, z.B. eine Abflachung 52 ausgebildet, die von dem Durchlassbereich 4 formschlüssig aufgenommen wird, wie es bereits bei der Ausführungsform der Fig. 11 beschrieben wurde. Bei Fig. 12d und auch bei Fig. 11 kann gemäß dem Schnitt X-X ein beliebiger Formschluss, z.B. als Abflachung oder als Sechseck, ausgebildet sein.

Die Fig. 13a bis 13c zeigen weitere Ausführungsformen, bei denen der Ventilteller 39 als Sicherungsmutter, entsprechend der Ausführungsform der Fig. 2 bis 11, ausgebildet ist. Bei diesen Ausführungsformen ist als Durchlassmittel jedoch eine Durchlassscheibe 94 zwischen einem Schraubenkopf 96, gegebenenfalls mit Unterlegscheibe, und einer Ventilfeder 14 vorgesehen, die den Ventilteller 39 gegenüber der Durchlassscheibe 94 verspannt. Hierbei schnappt die Ventilfeder 14 beim Einsetzen in einen entsprechenden Absatz 9 am unteren, äußeren Rand 99 der Durchlassscheibe 94 ein.

Gemäß der Ausführungsform der Fig. 13 a kann der Ventilteller 39 mit einem zylindrischen, geschlitzten Absatz 55 zur klemmenden Sicherung des Bolzens 45, oder gemäß Fig. 13c als Sicherheitsmutter 39 zur klemmenden Sicherung des Bolzens 45 ausgebildet sein. Die Schraubenfeder 14 kann gemäß Fig. 13a im Wesentlichen zylindrisch oder entsprechend Fig. 13b sich nach oben verjüngend, d.h. mit progressiver Kennlinie, ausgebildet sein.

In Fig. 14a bis d sind mehrere mögliche Ausbildungen der Durchlassscheibe 94 mit Durchlassbereichen und mittigem Durchgangsloch 105 zum Durchsetzen des Bolzens gezeigt. Gemäß Fig. 14a, 14b kann ein Stern mit radial nach außen verlaufenden Speichen 102, z.B. drei oder sechs Speichen 102 und Lücken 104 zwischen diesen vorgesehen sein. Weiterhin können gemäß Fig. 14c um das mittige Durchgangsloch 105 verteilt Bohrungen 100 ausgebildet sein. Gemäß Fig. 14d kann die Durchlassscheibe 94 auch im Wesentlichen zahnradförmig ausgebildet sein. Bei den Ausführungsformen der Fig. 14a, b, d werden die Durchlassbereiche zusammen mit der Innenwand der Einschraubverschraubung 102 gebildet.

Die Rohrbruchventile 101 der Fig. 15a bis h weisen anders als die oben beschriebenen Ausführungsformen keine Einschraubverschraubung, sondern ein in axialer Richtung kleines Ventileinschraubgehäuse 102 auf; ansonsten sind Ausbildungen der Rohrbruchventile 101 entsprechend den obigen Beispielen, allerdings ohne Filtereinsatz 24, möglich. Die Rohrbruchventile 101 werden jeweils gemäß Fig. 16 an ihrer Außenseite, d.h. einem Außengewinde 103, mit Klebstoff versehen und in ein Innengewinde 37 einer Bohrung 38 des Hydraulikzylinders 30 eingesetzt, so dass das Ventileinschraubgehäuse 102 vollständig in der Bohrung 38 aufgenommen ist. Nachfolgend wird durch Drehen der Einstellmutter 12 bzw. des Schraubenkopfes 41 der Durchlassspalt S eingestellt. Danach wird von außen ein Fitting 108 eingeschraubt.

Bei Fig. 17 wird zunächst die Einschraubverschraubung 2 eingeschraubt und nachfolgend durch Drehen der Einstellmutter 12 bzw. des Schraubenkopfes 41 der Durchlassspalt S eingestellt. Die Spalteinstellung kann aufgrund der bekannten Gewindesteigung sehr genau vorgenommen werden. Bei unbekannter Einstellung des Durchlassspaltes S kann gegebenenfalls zunächst das Gewinde auf Anschlag gedreht und danach in die gewünschte Stellung gedreht werden.

Bei beiden Ausführungsformen von Fig. 16 und Fig. 17 wird auf die Einschraubverschraubung 2 bzw. das Fitting 108 wiederum eine Überwurfmutter 110 zum Anschluss eines Anschlussrohres 112 aufgeschraubt, an das wiederum ein Rohr 114 angesetzt wird.

## Patentansprüche

1. Rohrbruchventil für ein Hydrauliksystem, das aufweist:
ein Einschraubgehäuse (2, 102) mit einem Gehäuseinnenraum (3), einen axial verschiebbaren Ventilteller (9, 39) zum Verschließen des Gehäuseinnenraums (3),
einen Bolzen (10, 45) mit Schraubenkopf (41) oder einen Bolzen (10, 45) und eine auf den Bolzen (10, 45) aufgeschraubte Mutter (12, 39), wobei der Bolzen mit Schraubenkopf oder der Bolzen und die Mutter zur Einstellung eines Durchlassspaltes (S) zwischen dem Ventilteller (9, 39) und einem Ventilsitz (16, 76) des Einschraubgehäuses (2, 102) vorgesehen sind, ein gehäusefest vorgesehenes Durchlassmittel (4, 56, 94) mit Durchlässen (6) für das Hydraulikfluid, und
eine zwischen dem Ventilteller (9) und dem Durchlassmittel (4, 56, 94) angeordnete, vorgespannte Ventilfeder (14), die den Ventilteller (9) unter Ausbildung des Durchlassspaltes (S) in die Offenstellung drückt,
wobei
das Durchlassmittel (4, 56, 94) gegenüber dem Anziehmoment zwischen Mutter (12, 39) und Bolzen (10, 45), der Federkraft der Ventilfeder (14) und dem Hydraulikdruck biegesteif ist, **dadurch gekennzeichnet, dass**
der Ventilteller (9) ohne Axialspiel mit dem Bolzen (10) verbunden ist, und
der Durchlassspalt (S) durch Drehen der Mutter (12, 39) oder des Schraubenkopfes (41) von lediglich einem Anschluss (5) her einstellbar ist.

2. Rohrbruchventil nach Anspruch 1, **dadurch gekennzeichnet, dass** das Durchlassmittel ein mit dem Einschraubgehäuse (2,102) einteilig ausgebildeter Durchlassbereich (4) ist.

3. Rohrbruchventil nach Anspruch 2, **dadurch gekennzeichnet, dass** die Öffnungen (6) in dem Durchlassbereich (4) um dessen mittiges Durchgangsloch (7) ausgebildete Bohrungen (6) sind.

4. Rohrbruchventil nach Anspruch 1, **dadurch gekennzeichnet, dass** das Durchlassmittel ein in dem Einschraubgehäuse (2, 102) eingesetztes oder eingedrehtes Durchlassteil (56, 94) ist, in dem Freiräume (6, 104) für das Hydraulikfluid ausgebildet sind.

5. Rohrbruchventil nach Anspruch **4, dadurch gekennzeichnet, dass** das Durchlassmittel als Durchlassscheibe (94) mit Bohrungen (100) oder mit Speichen (102) und zwischen den Speichen (102) ausgebildeten Freiräumen (104) für das Hydraulikfluid ausgebildet ist.

6. Rohrbruchventil nach Anspruch 4, **dadurch gekennzeichnet, dass** das Durchlassmittel ein in dem Einschraubgehäuse (2, 102) eingedrehtes, gegen Verdrehung durch Körnerschlag oder durch ein Klebmittel gesichertes Durchlassteil (56) mit einem Außengewinde (57) ist.

7. Rohrbruchventil nach einem der vorherigen Ansprüche, **dadurch gekennzeichnet, dass**
der Ventilteller (9) mit dem Bolzen (10) einteilig ausgebildet oder drehsteif verbunden ist und in dem Einschraubgehäuse (2,102) mit einer Verdrehsicherung (20, 52) und axial verschiebbar aufgenommen ist, und
auf dem Bolzen (10) eine sich auf dem Durchlassmittel (4, 94) abstützende Einstellmutter (12) aufgeschraubt ist, die von einem Anschluss (5) des Einschraubgehäuses (2, 102) her einstellbar ist.

8. Rohrbruchventil nach einem der Ansprüche 1 bis 6, **dadurch gekennzeichnet, dass**
der Ventilteller (39) als auf den Bolzen (10) aufgeschraubte Mutter ausgebildet und in dem Einschraubgehäuse (2, 102) mit einer Verdrehsicherung (20, 52) und axial verschiebbar aufgenommen ist, und ein auf dem Bolzen (45) ausgebildeter Schraubenkopf (41) sich auf dem Durchlassmittel (4, 94) abstützt und von einem Anschluss (5) des EinschraubgehäL ses (2, 102) her einstellbar ist.

9. Rohrbruchventil nach Anspruch 8, **dadurch gekennzeichnet, dass** der Ventilteller (39) als Sicherungsmutter mit einer eine Klemmsicherung bewirkenden Kunststoffeinlage (44) ausgebildet ist.

10. Rohrbruchventil nach Anspruch 8, **dadurch gekennzeichnet, dass** an dem Ventilteller (39) ein zylindrischer, geschlitzter Ansatz (55) zur Klemmsicherung des Bolzens (45) ausgebildet ist.

11. Rohrbruchventil nach einem der Ansprüche 8 bis 10, **dadurch gekennzeichnet dass** auf dem Bolzen (45) unterhalb des als Mutter ausgebildeten Ventiltellers (39) eine Verliersicherung (48, 53) vorgesehen ist.

12. Rohrbruchventil nach Anspruch 11, **dadurch gekennzeichnet, dass** die Verliersicherung ein Klemmring (48) oder eine auf den Bolzen (45) aufgeschraubte Hutmutter (53) ist.

13. Rohrbruchventil nach einem der Ansprüche 7 bis 12, **dadurch gekennzeichnet, dass** die Einstellmutter (12, 39) oder der Schraubenkopf (41) von dem Eingangsanschluss (5) aus einstellbar ist, wobei der Ventilteller an dem Ausgangsanschluss angeordnet ist.

14. Rohrbruchventil nach einem der Ansprüche 7 bis 13, **dadurch gekennzeichnet, dass** als Verdrehsicherung mindestens ein in den Ventilteller (9, 39) eingesetzter Passstift (20) vorgesehen ist, der axial verschiebbar und drehsicher in dem Durchlassmittel aufgenommen ist.

15. Rohrbruchventil nach einem der Ansprüche 7 bis 13, **dadurch gekennzeichnet, dass** als Verdrehsicherung ein formschlüssiger Einsatz, z. B. eine Abflachung (52) oder Sechseckausbildung des Bolzens (10) in dem Durchflussmittel (4, 94) vorgesehen ist

16. Rohrbruchventil nach einem der vorherigen Ansprüche, **dadurch gekennzeichnet, dass** zusätzlich zu der Ventilfeder (14) eine Zusatzfeder (82) vorgesehen ist zur Vergrößerung des Durchlassspaltes (S) bei einer anliegenden Druckdifferenz, die einen vorgegebenen Normaldruckwert überschreitet.

17. Rohrbruchventil nach Anspruch 16, **dadurch gekennzeichnet, dass** die Zusatzfeder (82) an der der Ventilfeder (14) gegenüberliegenden Seite des Durchlassmittels (4, 94) vorgesehen ist.

18. Rohrbruchventil nach einem der vorherigen Ansprüche, **dadurch gekennzeichnet, dass** an einem Anschluss des Ventilgehäuses (2, 102), insbesondere an der Ausgangsseite, ein Filtereinsatz (24) mit mindestens einem Teilchenfilter (27) angeschlossen ist.

19. Rohrbruchventil nach einem der vorherigen Ansprüche, **dadurch gekennzeichnet, dass** die axiale Länge des Durchgangslochs (7, 54) größer/gleich der radialen Breite (d) des Durchgangslochs (7, 54) ist.

20. Rohrbruchventil nach einem der vorherigen Ansprüche, **dadurch gekennzeichnet, dass** die Dicke des biegesteifen Durchlassmittels (4, 94) mindestens 1,6 mm beträgt.

21. Rohrbruchventil nach einem der vorherigen Ansprüche, **dadurch gekennzeichnet, dass** der Bolzen (10, 45) einen gewindefreien Schaftbereich (42) aufweist, der durch das Durchlassmittel (4, 94) verläuft.

22. Rohrbruchventil nach Anspruch 21, **dadurch gekennzeichnet, dass** der gewindefreie Schaftbereich (42) durch das Durchlassmittel (4, 94) bis zu einem mittlerem Bereich zwischen dem Durchlassmittel (4, 94) und dem Ventilteller (39) verläuft.

23. Rohrbruchventil nach einem der vorherigen Ansprüche, **dadurch gekennzeichnet, dass** das Einschraubgehäuse eine Einschraubverschraubung (2) ist mit einem Außengewinde (36) zum Eindrehen in ein Bauteil (30) und zur Aufnahme eines Rohres.

24. Rohrbruchventil nach einem der Ansprüche 1 bis 22, **dadurch gekennzeichnet, dass** das Einschraubgehäuse ein Ventileinschraubgehäuse (102) zum vollständigen Einsetzen in eine Bohrung eines Bauteils (30) ist.

## Claims

1. Pipe-break valve for a hydraulic system, comprising:
a screw-in housing (2, 102) having a housing interior (3), an axially displaceable valve disc (9, 39) for sealing the housing interior (3), a bolt (10, 45) with bolt head (41) or a bolt (10, 45) and a nut (12, 39) screwed onto the bolt (10, 45), wherein the bolt with bolt head or the bolt and the nut are provided for adjusting a let-through gap (S) between the valve disc (9, 39) and a valve seat (16, 76) of the screw-in housing (2, 102), a let-through means (4, 56, 94) provided in a housing-fixed manner and having passages (6) for the hydraulic fluid, and a biased valve spring (14), which is disposed between the valve disc (9) and the let-through means (4, 56, 94) and presses the valve disc (9) into the open position, simultaneously forming the let-through gap (S), wherein the let-through means (4, 56, 94) is flexurally stiff relative to the tightening moment between nut (12, 39) and bolt (10, 45), the spring force of the valve spring (14) and the hydraulic pressure, **characterized in that** the valve disc (9) is connected without axial play to the bolt (10), and the let-through gap (S) is adjustable by turning the nut (12, 39) or the bolt head (41) from only one port (5).

2. Pipe-break valve according to claim 1, **characterized in that** the let-through means is a let-through region (4) formed integrally with the screw-in housing (2, 102).

3. Pipe-break valve according to claim 2, **characterized in that** the openings (6) are bores (6) formed in the let-through region (4) around the central through-hole (7) thereof.

4. Pipe-break valve according to claim 1, **characterized in that** the let-through means is a let-through part (56, 94), which is inserted or screwed in the screw-in housing (2, 102) and in which free spaces (6, 104) for the hydraulic fluid are formed.

5. Pipe-break valve according to claim 4, **characterized in that** the let-through means takes the form of a let-through disk (94) having bores (100) or having spokes (102) and free spaces (104) formed between the spokes (102) for the hydraulic fluid.

6. Pipe-break valve according to claim 4, **characterized in that** the let-through means is a let-through part (56) with an external thread (57) that is screwed in the screw-in housing (2, 102) and locked against rotation by a punch mark or by an adhesive.

7. Pipe-break valve according to one of the preceding claims, **characterized in that** the valve disc (9) is formed integrally with, or connected in a torsionally stiff manner to, the bolt (10) and accommodated in the screw-in housing (2, 102) with an anti-rotation element (20, 52) and in an axially displaceable manner, and screwed on the bolt (10) is an adjusting nut (12), which is supported on the let-through means (4, 94) and adjustable from a port (5) of the screw-in housing (2, 102).

8. Pipe-break valve according to one of claims 1 to 6, **characterized in that** the valve disc (39) takes the form of a nut screwed onto the bolt (10) and is accommodated in the screw-in housing (2, 102) with an anti-rotation element (20, 52) and in an axially displaceable manner, and a bolt head (41) formed on the bolt (45) is supported on the let-through means (4, 94) and adjustable from a port (5) of the screw-in housing (2, 102).

9. Pipe-break valve according to claim 8, **characterized in that** the valve disc (39) takes the form of a lock nut having a plastic insert (44) that effects a clamping lock.

10. Pipe-break valve according to claim 8, **characterized in that** a cylindrical, slotted extension (55) is formed on the valve disc (39) for effecting the clamping lock of the bolt (45).

11. Pipe-break valve according to one of claims 8 to 10, **characterized in that** an anti-loss device (48, 53) is provided on the bolt (45) below the valve disc (39) in the form of a nut.

12. Pipe-break valve according to claim 11, **characterized in that** the anti-loss device is a clamping ring (48) or a cap nut (53) screwed onto the bolt (45).

13. Pipe-break valve according to one of claims 7 to 12, **characterized in that** the adjusting nut (12, 39) or the bolt head (41) is adjustable from the inlet port (5), wherein the valve disc is disposed at the outlet port.

14. Pipe-break valve according to one of claims 7 to 13, **characterized in that** as an anti-rotation element at least one alignment pin (20) is provided, which is inserted into the valve disc (9, 39) and accommodated in the let-through means so as to be axially displaceable and locked against rotation.

15. Pipe-break valve according to one of claims 7 to 13, **characterized in that** as an anti-rotation element a form-fit insert, for example a flattened portion (52) or hexagonal design of the bolt (10) is provided in the let-through means (4, 94).

16. Pipe-break valve according to one of the preceding claims, **characterized in that** in addition to the valve spring (14) an additional spring (82) is provided for enlarging the let-through gap (S) in the event of an applied pressure difference that exceeds a defined normal pressure value.

17. Pipe-break valve according to claim 16, **characterized in that** the additional spring (82) is provided on the opposite side of the let-through means (4, 94) to the valve spring (14).

18. Pipe-break valve according to one of the preceding claims, **characterized in that** a filter insert (24) having at least one particle filter (27) is connected to a port of the valve housing (2, 102), in particular to the outlet side.

19. Pipe-break valve according to one of the preceding claims, **characterized in that** the axial length of the through-hole (7, 54) is greater than/equal to the radial width (d) of the through-hole (7, 54).

20. Pipe-break valve according to one of the preceding claims, **characterized in that** the thickness of the flexurally stiff let-through means (4, 94) is at least 1.6 mm.

21. Pipe-break valve according to one of the preceding claims, **characterized in that** the bolt (10, 45) has a thread-free shank region (42) that extends through the let-through means (4, 94).

22. Pipe-break valve according to claim 21, **characterized in that** the thread-free shank region (42) extends through the let-through means (4, 94) up to a central region between the let-through means (4, 94) and the valve disc (39).

23. Pipe-break valve according to one of the preceding claims, **characterized in that** the screw-in housing is a screw-in screw fitting (2) with an external thread (36) for screwing into a component (30) and for receiving a pipe.

24. Pipe-break valve according to one of claims 1 to 22, **characterized in that** the screw-in housing is a valve screw-in housing (102) for total insertion into a bore of a component (30).

## Revendications

1. Soupape d'arrêt automatique pour un système hydraulique qui comporte :
un boîtier fileté (2, 102) avec un espace intérieur de boîtier (3), une tête de soupape (9, 39) mobile axialement pour obturer l'espace intérieur de boîtier (3),
un boulon (10, 45) avec tête de vis (41) ou un boulon (10, 45) et un écrou (12, 39) vissé sur le boulon (10, 45), le boulon avec tête de vis ou le boulon et l'écrou étant prévus pour le réglage d'une fente de passage (S) entre la tête de soupape (9, 39) et un siège de soupape (16, 76) du boîtier fileté (2, 102),
un moyen de passage (4, 56, 94) prévu fixé au boîtier avec des passages (6) pour le fluide hydraulique, et
un ressort de soupape (14) précontraint disposé entre la tête de soupape (9) et le moyen de passage (4, 56, 94), qui sollicite la tête de soupape (9) dans la position ouverte en formant la fente de passage (S),
dans laquelle
le moyen de passage (4, 56, 94) est résistant à la flexion par rapport au couple de serrage entre l'écrou (12, 39) et le boulon (10, 45), à la force de ressort du ressort de soupape (14) et à la pression hydraulique,
**caractérisée en ce que**
la tête de soupape (9) est raccordée au boulon (10) sans jeu axial, et
la fente de passage (S) est réglable par la rotation de l'écrou (12, 39) ou de la tête de vis (41) uniquement à partir d'un raccord (5).

2. Soupape d'arrêt automatique selon la revendication 1, **caractérisée en ce que** le moyen de passage est une zone de passage (4) réalisée d'un seul tenant avec le boîtier fileté (2, 102).

3. Soupape d'arrêt automatique selon la revendication 2, **caractérisée en ce que** les ouvertures (6) dans la zone de passage (4) sont des alésages (6) réalisés autour du trou de passage central (7) de celle-ci.

4. Soupape d'arrêt automatique selon la revendication 1, **caractérisée en ce que** le moyen de passage est une partie de passage (56, 94) insérée ou vissée dans le boîtier fileté (2, 102), dans laquelle des espaces libres (6, 104) sont réalisés pour le fluide hydraulique.

5. Soupape d'arrêt automatique selon la revendication 4, **caractérisée en ce que** le moyen de passage est conçu comme un disque de passage (94) avec des alésages (100) ou avec des rayons (102) et des espaces libres (104) prévus entre les rayons (102) pour le fluide hydraulique.

6. Soupape d'arrêt automatique selon la revendication 4, **caractérisée en ce que** le moyen de passage est une partie de passage (56) avec un filet externe (57) vissée dans le boîtier fileté (2, 102), bloquée en rotation par coup de pointeau ou à l'aide d'un adhésif.

7. Soupape d'arrêt automatique selon l'une quelconque des revendications précédentes, **caractérisée en ce que** la tête de soupape (9) est réalisée d'un seul tenant avec le boulon (10) ou est raccordée à celui-ci pour résister à la torsion et est logée dans le boîtier fileté (2, 102) avec un dispositif anti-torsion (20, 52) et de manière mobile axialement,
et
un écrou de réglage (12) s'appuyant sur le moyen de passage (4, 94), qui est réglable à partir d'un raccord (5) du boîtier fileté (2, 102), est vissé sur le boulon (10).

8. Soupape d'arrêt automatique selon l'une quelconque des revendications 1 à 6, **caractérisée en ce que** la tête de soupape (39) est réalisée sous forme d'écrou vissé sur le boulon (10) et est logée dans le boîtier fileté (2, 102) avec un dispositif anti-torsion (20, 52) et de manière mobile axialement, et une tête de vis (41) prévue sur le boulon (45) s'appuie sur le moyen de passage (4, 94) et est réglable à partir d'un raccord (5) du boîtier fileté (2, 102).

9. Soupape d'arrêt automatique selon la revendication 8, **caractérisée en ce que** la tête de soupape (39) est réalisée sous forme d'écrou de blocage avec une pièce intercalaire en matière plastique (44) assurant un blocage par serrage.

10. Soupape d'arrêt automatique selon la revendication 8, **caractérisée en ce qu'**un épaulement cylindrique fendu (55) est prévu sur la tête de soupape (39) pour le blocage par serrage du boulon (45).

11. Soupape d'arrêt automatique selon l'une quelconque des revendications 8 à 10, **caractérisée en ce qu'**il est prévu une fixation anti-détachement (48, 53) sur le boulon (45) en dessous de la tête de soupape (39) réalisée sous forme d'écrou.

12. Soupape d'arrêt automatique selon la revendication 11, **caractérisée en ce que** la fixation anti-détachement est une bague de serrage (48) ou un écrou borgne (53) vissé sur le boulon (45).

13. Soupape d'arrêt automatique selon l'une quelconque des revendications 7 à 12, **caractérisée en ce que** l'écrou de réglage (12, 39) ou la tête de vis (41) est réglable à partir du raccord d'entrée (5), la tête de soupape étant placée sur le raccord de sortie.

14. Soupape d'arrêt automatique selon l'une quelconque des revendications 7 à 13, **caractérisée en ce qu'**il est prévu comme dispositif anti-torsion au moins une goupille de serrage (20) insérée dans la tête de soupape (9, 39), qui est logée dans le moyen de passage de manière mobile axialement et résistant à la torsion.

15. Soupape d'arrêt automatique selon l'une quelconque des revendications 7 à 13, **caractérisée en ce qu'**il est prévu comme dispositif anti-torsion dans le moyen de passage (4, 94) un insert à fermeture géométrique, par exemple un méplat (52) ou la forme hexagonale du boulon (10).

16. Soupape d'arrêt automatique selon l'une quelconque des revendications précédentes, **caractérisée en ce que**, en plus du ressort de soupape (14), il est prévu un ressort supplémentaire (82) pour élargir la fente de passage (S) en cas de différence de pression appliquée qui dépasse une valeur de pression normale prédéterminée.

17. Soupape d'arrêt automatique selon la revendication 16, **caractérisée en ce que** le ressort supplémentaire (82) est prévu sur le côté du moyen de passage (4, 94) opposé au ressort de soupape (14).

18. Soupape d'arrêt automatique selon l'une quelconque des revendications précédentes, **caractérisée en ce qu'**un élément filtrant (24) avec au moins un filtre à particules (27) est raccordé à un raccord du boîtier de soupape (2, 102), en particulier du côté sortie.

19. Soupape d'arrêt automatique selon l'une quelconque des revendications précédentes, **caractérisée en ce que** la longueur axiale du trou de passage (7, 54) est égale/supérieure à la largeur radiale (d) du trou de passage (7, 54).

20. Soupape d'arrêt automatique selon l'une quelconque des revendications précédentes, **caractérisée en ce que** l'épaisseur du moyen de passage résistant à la flexion (4, 94) est d'au moins 1,6 mm.

21. Soupape d'arrêt automatique selon l'une quelconque des revendications précédentes, **caractérisée en ce que** le boulon (10, 45) comporte une zone de tige sans filet (42), qui traverse le moyen de passage (4, 94).

22. Soupape d'arrêt automatique selon la revendication 21, **caractérisée en ce que** la zone de tige sans filet (42) traverse le moyen de passage (4, 94) jusqu'à une zone médiane entre le moyen de passage (4, 94) et la tête de soupape (39).

23. Soupape d'arrêt automatique selon l'une quelconque des revendications précédentes, **caractérisée en ce que** le boîtier fileté est un raccord mâle (2) avec un filet externe (36) pour le vissage dans un élément de construction (30) et pour la réception d'un tube.

24. Soupape d'arrêt automatique selon l'une quelconque des revendications 1 à 22, **caractérisée en ce que** le boîtier fileté est un boîtier fileté de soupape (102) destiné à l'insertion complète dans un alésage d'un élément de construction (30).
